Europäisches Patentamt

European Patent Office

Office européen des brevets

(11) Publication number: **0 038 190**
**B1**

# EUROPEAN PATENT SPECIFICATION

(45) Date of publication of patent specification: **11.09.85**

(51) Int. Cl.⁴: **H 04 N 5/783**

(21) Application number: **81301581.5**

(22) Date of filing: **10.04.81**

(54) **Apparatus for processing video signals.**

(30) Priority: **11.04.80 JP 48361/80**

(43) Date of publication of application:
**21.10.81 Bulletin 81/42**

(45) Publication of the grant of the patent:
**11.09.85 Bulletin 85/37**

(84) Designated Contracting States:
**DE FR GB**

(56) References cited:
**FR-A-2 367 395**
**GB-A-2 019 690**
**NL-A-7 907 274**

(73) Proprietor: **Matsushita Electric Industrial Co., Ltd.**
**1006, Oaza Kadoma**
**Kadoma-shi Osaka-fu, 571 (JP)**

(72) Inventor: **Honjo, Masahiro**
**30-23, Miyukihigashi-machi Neyagawa-shi Osaka-fu (JP)**
Inventor: **Tomita, Masao**
**271-2, Oaza-Uchiage**
**Neyagawa-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to an apparatus for processing video signals for eliminating vertical picture fluctuations that appear in monitoring video signals (by a television receiver) which are reproduced from a video tape recorder when the speed of the tape in the reproducing mode is different from the speed of the tape in the recording mode.

In a rotary head magnetic recording and reproducing system (hereinafter referred to as VTR), the slopes of the paths traced by the scanning rotary heads upon reproduction are different from the slopes of the tracks recorded by the rotary heads when reproduction is performed at a tape transportation speed different from that of recording e.g. when reproduction is slow motion reproduction, still picture reproduction or quick motion reproduction. For example, in a VTR wherein the tape scanning direction of the rotary heads is the same as that of tape transport, the slope of the paths traced by the rotary heads for slow motion reproduction and still picture reproduction is less steep than the slope of the recorded tracks, whereas the slope of the paths traced by the rotary heads for quick reproduction is steeper than the slope of the recorded tracks. Therefore, in the reproduction mode in these cases, the heads scan a plurality of recorded tracks in one field. Not only noise bands are produced thereby, but also the number of the horizontal synchronising signals (H number) reproduced in each field becomes different from the H number in recording. For example, in the case of NTSC still picture reproduction by a VTR for azimuth recording which performs a 1.5H H number adjustment, 264H are reproduced in a field. (Usually this should be 262.5H).

In a VTR for azimuth recording, output signals cannot be obtained upon reproduction unless the heads used in recording are identical to those used upon reproduction. So, since the H number upon reproduction is different from that upon recording as mentioned above, the time periods between adjacent vertical synchronous signals in the reproduced video signals become different from those in the recorded video signals. In the above-mentioned example, a time difference of 3H occurs between the adjacent fields. That is, the vertical synchronising signals cycle by 262.5H, 265.5H, 262.5H, 265.5H, ....., namely by alternating long and short fields. In the slow motion reproduction mode also, similar differences of the vertical synchronising signal cycle period occurs. But in this case, adjacent fields are not long and short as was the case in still picture reproduction. The length of a cycle depends on the ratio of reproduction speed to recording speed, for example, in a 1/5 slow motion reproduction, 5 fields form one cycle.

The foregoing description is directed to the case when each rotary head scans a plurality of recorded tracks in each scanning period upon reproduction. However, the above described inconstancy of vertical synchronising signal cycle period also occurs quite similarly when the VTR employs an electric-to-mechanical conversion element for moving each rotary head in a direction perpendicular to the scanning direction so as to perform complete on-tracking, because even in such a case the H number reproduced in each head scanning period is different from that recorded therein.

For example, in the case of still reproduction mode by said VTR which employs an electric-to-mechanical conversion element, for azimuth recording which performs H number adjustment by 1.5H, it reproduces 264H in one field.

For another example, in the case of slow reproduction mode by said VTR, for azimuth recording which performs H number adjustment by 1.5H, it reproduces either 264H or 261H each field.

If a composite video signal having such inconstant vertical synchronising signal cycle periods is applied to a television receiver, when the azimuth recording performs H number adjustments by 1.5H, the reproduced picture frames appear shifted vertically on the television screen, which is so called vertical picture fluctuation (hereinafter referred to as V-fluctuation), causing extremely ugly pictures.

Heretofore, as an example of the elimination of said V-fluctuation, there has been correction which delays the vertical synchronous signals of the video signal, however this correction requires an adjustment on each television which is very troublesome for users.

U.K. Patent Application 2019690A discloses a magnetic recording and reproducing apparatus which utilizes a variable delay circuit which is operative during reproducing when the tape speed is slower or faster than normal, in order to variably delay the video signal being reproduced. A control circuit controls the amounts by which the variable delay circuit delays the reproduced video signal, in accordance with the tape speed, to cause fields of the reproduced video signal which are contiguous or next adjacent in point of time to be continuous in the delayed video signal and to contain respective horizontal synchronising signals which are in predetermined phase relationships to each other, that is, precisely in phase or out of phase by one half horizontal period, as when even and odd numbered fields are to be interlaced.

In the above method a multi-stage charge coupled device (CCD) provides the delay, and switches which select delay waveforms according to the tape reproduction mode are utilized. The circuitry needed for this type of operation is complex. Also, during the actual switching operation of the switches, the application of the delay correction to the video waveform cannot be assured.

The present invention provides apparatus for processing video signals reproduced from a video recorder comprising a delay circuit which delays the video signal from the video recorder for a selected predetermined time, a velocity detector which detects the speed of the recording medium; and a control circuit connected to the velocity detector and produces a control signal applied to the delay circuit for controlling said time of delay, the control circuit being arranged to provide a first correction which controls the time of delay of the delay circuit to decrease step by step in each field of video signal and a second correction which controls the time of delay of the delay circuit to increase step by step in each field, whereby when the speed of reproduction is different from the speed of recording, the number of horizontal sync signals between vertical sync signals is kept substantially constant, characterised in that said apparatus further comprises a track shift detector which detects a shift of a video track scanned by the reproducing heads, and in that the control signal is produced according to signals from the velocity detector and the track shift detector.

A preferred embodiment of the invention prevents vertical picture fluctuation on a television screen by delaying the video signal which has a fluctuating vertical synchronous signal cycle period for a predetermined time in each field.

Features and advantages of the present invention will be apparent from the following detailed description of an embodiment thereof given by way of example when taken in conjunction with the accompanying drawings, in which:

Figure 1 is a representation of a recording pattern on magnetic tape produced by the magnetic heads of a video tape recorder;

Figure 2 is a table showing the correction of a 1/2 speed slow motion mode;

Figure 3 is a table showing the correction of a 4/3 speed fast motion mode;

Figure 4 shows the relationship between the correction and the reproduction speed of the tape;

Figure 5 shows a schematic block diagram of this invention;

Figure 6 shows a more detailed block diagram of this invention;

Figure 7 shows waveform diagrams to explain the slow motion mode of the circuit shown in Figure 6; and

Figure 8 shows waveform diagrams to explain the fast motion mode of the circuit shown in Figure 6.

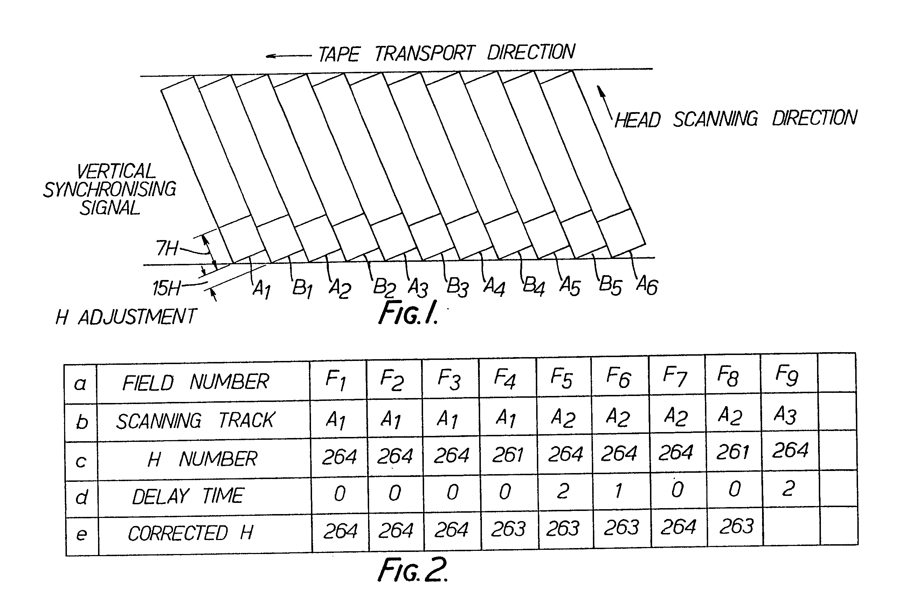

Referring to Figure 1, there is shown a recording pattern on the tape which is recorded by the magnetic heads of a VTR including: recorded tracks $A_1$, $B_1$, $A_2$, $B_2$, $A_3$, ...., the scanning direction of the magnetic heads, the transportation direction of the tape, the vertical synchronous signal, and the form of the H number adjustments (1.5H in this case), wherein recorded tracks $A_1$, $A_2$, $A_3$ ... are recorded by the magnetic head A with azimuth A and recorded track $B_1$, $B_2$, $B_3$ ... are recorded by the magnetic head B with azimuth B, and azimuth A is usually different from azimuth B.

From here on, we give a detailed description of VTR preforming an H number adjustment of 1.5H. As an example, we detail the case of a VTR which employs an electric-to-mechanical conversion element for moving each rotary head perpendicular to the scanning direction so as to perform complete on-tracking (and each head has the same azimuth).

Figure 2 shows a table giving the corrections for a 1/2 speed slow motion mode for a 525 line NTSC system; Figure 2(a) shows the field number, (b) is the track scanned by the magnetic heads, (c) is the H number in a field, (d) is the delay time for correction and (e) is the corrected H number in a field. The heads scan only, for example A tracks in the field reproductive mode, and in the 1/2 slow motion mode, they scan 4 times on each track like $A_1$, $A_1$, $A_1$, $A_1$, $A_2$, $A_2$, $A_2$, $A_2$, $A_3$, $A_3$ ... as shown in Figure 2(b). Although the H number in a field is 262.5H in normal mode, in this case the H number is 264H when the heads scan the same track, and when the heads shift track as for example $A_1 \rightarrow A_2$ or $A_2 \rightarrow A_3$, the H number of the preceding field becomes 261H. As a result, the H number suddenly changes by 3H when the heads shift track (264H→261H) so that V-fluctuation occurs. As shown in Figure 2(d), the video signal of the field number F5 is delayed 2H, and the video signal of the next field F6 is delayed 1H. Here, H number in a field is corrected to 263H as shown in Figure 2(e).

Generally speaking, when video signal delay of the following field is 2H, and delay of the video signal of the next field is 1H, and no delay occurs anytime after that, the difference of the H number in each field is reduced to within 1H, and this reduces V-fluctuation. Thus, there is correction which delays the video signal for 2H, 1H, 0, in order of field. This correction is the first correction.

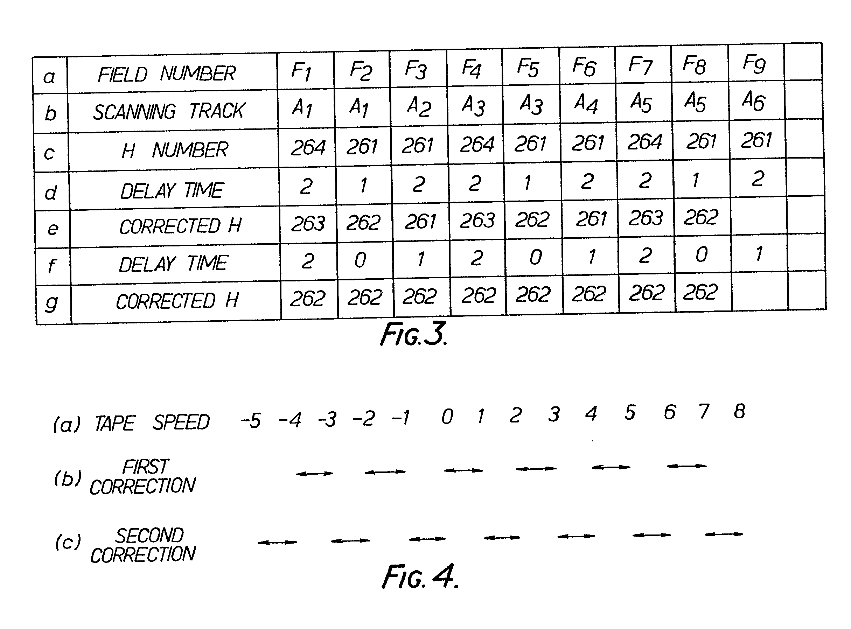

Similarly, Figure 3 shows the correction in the 4/3 fast motion mode. In this case, two heads scan the track as $A_1$, $A_1$, $A_2$, $A_3$, $A_3$, $A_4$ .... but, then H number corrected by the first correction is not correct as shown in Figure 3(e). Figure 3(d) shows the delayed time by the first correction. So when using a correction which usually delays the video signal for 2H and does not delay the video signal of the following field (where the magnetic heads do not shift track), and delays the video signal of the next field for 1H, and then delays for 2H after that as shown in Figure 3(f), the difference of the H number in each field is eliminated as shown in Figure 3(g) and the corrected H number is 262H in all fields. This correction is the second correction. In the above mentioned, two corrections were detailed at two fixed speeds of the tape, 1/2 slow motion mode and 4/3 fast motion mode.

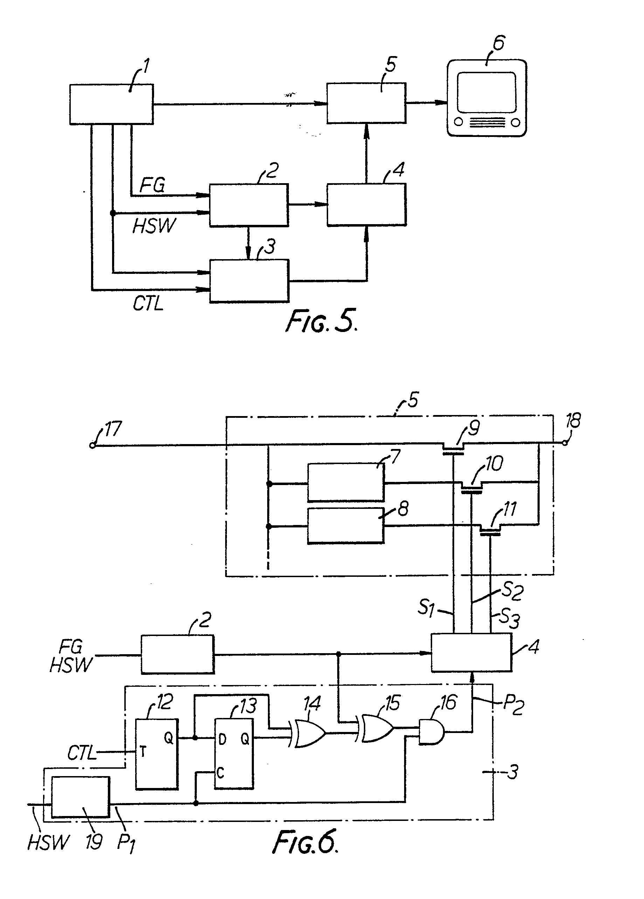

Here, these types of corrections can be developed for any speed mode, that is, by adjusting correction to match tape speed, we can correct the video signal in any speed of the tape. When the tape speed during reproduction is between 2n and 2n+1 times the tape speed during recording, the first correction will be selected, and when the tape speed during reproduction is between 2n+1 and 2n+2 times the tape speed during recording, the second correction will be selected where n denotes any integer including zero. Figure 4 shows the relation between the correction and the reproduction speed of the tape. For example, in X-4 to X-3 speed of the tape, this system uses the first correction, and in X1 to X2 speed of the tape, it uses the second correction. Then the field where correction is started is the following field which is detected by the track shift detector. A track shift detector detects the number of control signals in one field (which is either an odd number or an even number including zero). For example, in X-1 to X1 speed of the tape, the number of the control signal is usually zero in a field and in X3 to X5 speed of the tape, the number of the control signal is usually two in a field. So the track shift detector detects fields which have an odd number of control signals in a field. The other way for example in X-3 to X-1 speed of the tape or in X1 to X3 speed of the tape, the track shift detector detects fields which have an even or zero number of control signals in a field because the number of the control signals in a field is usually an odd number.

In summarizing, this invention at first detects the speed of the tape by a velocity detector, and chooses the correction corresponding to that speed of the tape, and detects the field where correction is to start by a track shift detector, and delays the video signal in each field for a predetermined time. In this way, this system is able to correct any tape speed.

Figure 5 shows a schematic block diagram of this invention, wherein the video signal reproduced by a VTR 1 is supplied to a delay circuit 5, and an output of the delay circuit 5 is supplied to a television 6. The signals picked up from the VTR 1 are not only the video signals but also a head switch (HSW) signal, a control signal (CTL) and an output signal from the frequency generator which generates signals in proportion to the speed of the tape (FG). Signals FG and HSW are supplied to a velocity detector 2, and signals HSW and CTL are supplied to a track shift detector 3. An output of the velocity detector 2 is supplied to the track shift detector 3 and a control circuit 4, and an output of the track shift detector 3 is supplied to the control circuit 4, and the control circuit 4 controls the delay circuit 5.

The delay circuit 5 is the circuit which delays the reproduced video signal for a predetermined time on each field, wherewith the reproduced video signal which is an output of the delayed circuit 5 is corrected so that the H number in a field is almost constant. The reproduced picture thus appears stable on the screen of the television 6.

The control circuit 4 which is connected to the velocity detector 2 and the track shift detector 3 controls the delay circuit 5 to choose one of two corrections at any given time, the first correction or the second correction. Here, the first correction delays video signals for the maximum time, and controls the time of delay so that it decreases step by step in each field, for example 2H, 1H, 0H. The second correction delays video signals for the minimum time, and controls the time of delay so that it increases step by step in each field, for example 0H, 1H, 2H. The velocity detector 2 detects the speed of the tape by the counting of FG for a fixed period for example one field period, wherein it comprises a comparator and a counter and gates.

The track shift detector 3 detects the shift of the track which the heads scan, wherein input signals are HSW and CTL from the VTR 1, and the track shift detector 3 is constituted by a counter which determines whether the number of the CTL in a field is an odd or an even number or zero, then by said detection and the signal from the velocity detector 2, generates a signal at the top of the field in which correction is to start, and supplies said signal to the control circuit 4.

The track shift detector 3 generates said signal when the number of the CTL in a field is an odd number and the tape speed during reproduction is between 4n−1 and 4n+1 times the tape speed during recording, or when the number of the CTL in a field is an even number including zero and the tape speed during reproduction is between 4n+1 and n4+3 times.

Referring to Figure 6, there is shown a more detailed block diagram of this invention, wherein an input terminal 17 is connected to the output of the VTR 1, and output terminal 18 is connected to the television 6. The delay circuit 5 which is surrounded with a dot-dash line comprises a 1H delay block 7 which delays the video signal for 1H, a 2H delay block 8 which delays the signal for 2H, an analog switch 9 for directly switching the input signal, an analog switch 10 for switching the 1H delayed signal and an analog switch 11 for switching the 2H delayed signal whereby to apply one of said signals to the output terminal 18. Analog switches 9, 10, 11 are supplied with signals $S_1$, $S_2$, $S_3$ each field under the control of the control circuit 4 of each field. The track shift detector 3 which is surrounded by a dot-dash line comprises a T-flip-flop (T-FF) 12, a D-flip-flop (D-FF) 13, EXCLUSIVE-OR gates 14, 15, an AND gate 16 and a differentiating circuit 19 for producing a signal P1 indicative of the change of HSW.

Within the track shift detector 3, the CTL signal is fed to the T input of the T-flip-flop 12 whose Q output is fed both to the D input of the D-flip-flop 13 as well as to one input of the EXCLUSIVE OR gate 14 whose other input is connected to the Q output of the D-flip-flop 13. The output of the gate 14 is fed as one input to the EXCLUSIVE OR gate 15 whose other input is the output from the velocity detector 2. The output of the gate 15 is fed to one input of the AND gate 16 whose output constitutes the output P2 of the detector 3.

The P1 signal from the circuit 13 is fed to the clock input of the D-flip-flop 13 and to the other input of the AND gate 16.

Now, referring to Figure 7, there is shown a timing chart for explaining the operation of Figure 6. Figure 7(a) shows HSW; Figure 7(b) shows the signal P1; Figure 7(c) shows the CTL signal which is supplied to T-FF 12; and Figure 7(d) shows the signal P2. Here, the signal of the velocity detector shows up at a low level. Figures 7(e), (f), (g) show the signals $S_1$, $S_2$, $S_3$ which are supplied to the analog switches 9, 10, 11.

The field in which CTL appears as in Figure 7(c) is the field in which the head shifts from one track to another, whereby the signal P2 is generated at the top of the following field as Figure 7(d). As shown in Figures 7(e), (f), (g), signal S1 keeps at a low level for 2 fields from signal P2 i.e. for one complete cycle of the HSW signal, signal S2 keeps at a high level at the second field from signal P2 i.e. the second half cycle of the HSW signal, signal S3 keeps at a high level for 1 field from signal P2 i.e. the first half cycle of the HSW signal, and they are generated by control circuit 4. Therefore, in the field immediately after the occurrence of the signal P2, the delay circuit chooses the 2H delayed video signal because signal S3 is high, and in the next field the delay circuit chooses the 1H delayed video signal because signal S2 is high, and in the next field, the delay circuit chooses the non-delayed video signal because signal S1 is high. This describes the first correction above-mentioned.

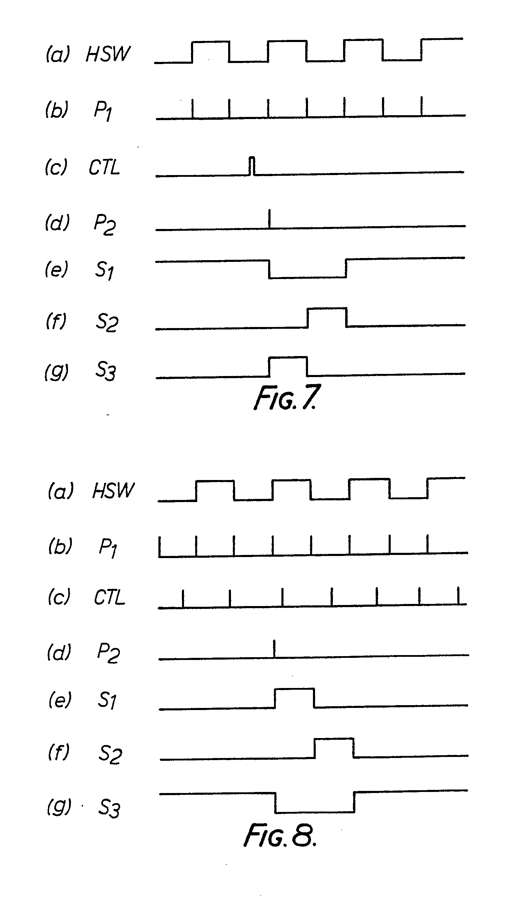

Figure 8 shows a timing chart for a X1 to X2 fast motion mode. In this mode, the output of the velocity detector 2 is at a high level as in Figure 6, and the CTL signal usually appears once per field as shown in Figure 8(c), whereas the H number in a field changes when CTL does not appear in a field, so the detail of said field has no CTL, and signal P2 is generated at the top of the field following the one in which CTL does not appear as in Figure 8(d). Figures 8(e), (f), (g) show the signals $S_1$, $S_2$, $S_3$ which are supplied to the analog switches 9, 10, 11. Here, in the field following the signal P2, the delay circuit 5 chooses the OH delayed video signal because $S_1$ is high, in the next field, the delay circuit 5 chooses the 1H delayed video signal because $S_2$ is high and in the next field, chooses the 2H delayed video signal because $S_3$ is high. This describes the above-mentioned second correction.

Referring back to Figure 6, the velocity detector 2 which detects the speed of the tape by counting the FG signal for a fixed time, feeds a signal which is either high or low to the track shift detector 3 and control circuit 4. This signal is at a low level when using the first correction, and is at a high level when using the second correction. Therefore, this invention prevents vertical picture fluctuation on a television screen in the abnormal reproducing mode.

The VTR preferably includes some means for shifting the heads to ensure correct tracking. This may take the form of a bi-morph leaf assembly which includes piezo-ceramic material.

## Claims

1. Apparatus for processing video signals reproduced from a video recorder (1), comprising:
a delay circuit (5) which delays the video signal from the video recorder (1) for a selected predetermined time;
a velocity detector (2) which detects the speed of the recording medium; and
a control circuit (4) connected to the velocity detector (2) and produces a control signal applied to the delay circuit (5) for controlling said time of delay, the control circuit (4) being arranged to provide a first correction which controls the time of delay of the delay circuit (5) to decrease step by step in each field of video signal and a second correction which controls the time of delay of the delay circuit (5) to increase step by step in each field,
whereby when the speed of reproduction is different from the speed of recording, the number of horizontal sync signals between vertical sync signals is kept substantially constant,
characterised in that said apparatus further comprises a track shift detector (3) which detects a shift of a video track scanned by the reproducing heads, and in that the control signal is produced according to signals from the velocity detector (2) and the track shift detector (3).

2. Apparatus according to claim 1, wherein the control circuit (5) is arranged to operate in such a way that, when the speed reproduction is between 2n and 2n+1 times the speed of recording (where n denotes an integer including zero) the control circuit (4) provides a first correction in response to an output signal of said track shift detector (3), and when the speed of reproduction is between 2n+1 and 2n+2 times the speed of recording the control circuit (5) provides a second correction in response to the output signal of said track shift detector (3).

3. Apparatus according to claim 2, wherein said track shift detector (3) comprises a counter (12, 13) arranged to count control pulses recorded on the control track of magnetic tape during a field, and to generate the output signal when said count is either an even number including zero or an odd number, and according to the signal of said velocity detector (2).

4. Apparatus according to claim 3, wherein, said track shift detector (3) generates the output signal when said count is an odd number and the speed of reproduction is between 4n−1 and 4n+1 times the speed of recording, and when said count is an even number including zero and the speed of reproduction is between 4n+1 and 4n+3 times the speed of recording.

## Revendications

1. Appareil pour le traitement de signaux vidéo reproduits à partir d'un enregistreur vidéo ou magnétoscope (1), comprenant:
un circuit à retard (5) qui retarde le signal vidéo provenant du magnétoscope (1) d'un temps prédéterminé sélectionné;

un détecteur de vitesse (2) qui détecte la vitesse du support d'enregistrement; et

un circuit de commande (4) connecté au détecteur de vitesse (2) et qui produit un signal de commande envoyé au circuit à retard (5) pour régler le temps de retard, le circuit de commande (4) étant agencé pour assurer une première correction qui règle le temps de retard du circuit à retard (5) pour une diminution pas-à-pas dans chaque trame d'un signal vidéo et une seconde correction qui règle le temps de retard du circuit à retard (5) pour une augmentation pas-à-pas dans chaque trame,

de sorte que, lorsque la vitesse de reproduction est différente de la vitesse d'enregistrement, le nombre de signaux de synchronisation horizontale entre les signaux de synchronisation verticale est maintenu essentiellement constant, caractérisé en ce qu'il comprend en outre un détecteur de décalage de piste (3) qui détecte un décalage d'une piste vidéo explorée par les têtes de reproduction, et en ce que le signal de commande est produit conformément à des signaux provenant du détecteur de vitesse (2) et du détecteur de décalage de piste (3).

2. Appareil selon la revendication 1, caractérisé en ce que le circuit de commande (5) est agencé pour fonctionner de telle manière que, lorsque la vitesse de reproduction est comprise entre 2n et (2n+1) fois la vitesse d'enregistrement (n indiquant un entier y compris zéro), le circuit de commande (4) assure une première correction en réponse à un signal de sortie du détecteur de décalage de piste (3), et, quand la vitesse de reproduction est comprise entre (2n+1) et (2n+2) fois la vitesse d'enregistrement, le circuit de commande (5) assure une seconde correction en réponse au signal de sortie du détecteur de décalage de piste (3).

3. Appareil selon la revendication 2, caractérisé en ce que le détecteur de décalage de piste (3) comprend un compteur (12, 13) agencé pour compter les impulsions de commande enregistrées sur la piste de commande de la bande magnétique pendant une trame, et pour engendrer le signal de sortie quand le compte est un nombre pair y compris zéro ou un nombre impair, et qui est conforme au signal du détecteur de vitesse (2).

4. Appareil selon la revendication 3, caractérisé en ce que le détecteur de décalage de piste (3) engendre le signal de sortie quand le compte et un nombre impair et que la vitesse de reproduction est comprise entre (4n−1) et (4n+1) fois la vitesse d'enregistrement, et quand le compte est un nombre pair y compris zéro et que la vitesse de reproduction est comprise entre (4n+1) et (4n+3) fois la vitesse d'enregistrement.

**Patentansprüche**

1. Vorrichtung zur Verarbeitung von von einem Videoaufzeichnungsgerät (1) wiedergegebenen Videosignalen,

mit einem Verzögerungsschaltkreis (5), der das Videosignal von dem Videoaufzeichnungsgerät (1) während einer ausgewählten, vorbestimmten Zeit verzögert,

einer Geschwindigkeitserfassungseinrichtung (2), welche die Geschwindigkeit des Aufzeichnungsmediums feststellt, und

einem Steuerschaltkreis (4), der mit der Geschwindigkeitserfassungseinrichtung (2) verbunden ist und ein Steuersignal erzeugt, welches an dem Verzögerungsschaltkreis (5) zur Steuerung der Zeit der Verzögerung anliegt, wobei der Steuerschaltkreis (4) so ausgebildet ist, daß eine erste Korrektur, welche die Zeit der Verzögerung des Verzögerungsschaltkreises (5) steuert, um schrittweise in jedem Videosignalfeld abzunehmen, und eine zweite Korrektur geliefert wird, welche die Zeit der Verzögerung des Verzögerungsschaltkreises (5) steuert, um schrittweise in jedem Feld zuzunehmen,

wodurch, wenn die Wiedergabegeschwindigkeit von der Aufzeichnungsgeschwindigkeit unterschiedlich ist, die Anzahl der horizontalen Synchronisierungssignale zwischen vertikalen Synchronisierungssignalen im wesentlichen konstant gehalten wird, dadurch gekennzeichnet, daß die Vorrichtung ferner eine Spurverschiebung-Efasserungseinrichtung (3) aufweist, welche eine Verschiebung einer von den Wiedergabeköpfen abgetasteten Videospur feststellt, und daß das Steuersignal in Übereinstimmung mit Signalen der Geschwindigkeitserfassungseinrichtung (2) und der Spurverschiebung-Erfassungseinrichtung (3) erzeugt wird.

2. Vorrichtung nach Anspruch 1, bei der der Steuerschaltkreis (5) ausgebildet ist, derart zu arbeiten, daß, wenn die Wiedergabegeschwindiget zwischen dem 2n-fachen und (2n+1)-facen der Aufzeichnungsgeschwindigkeit (wobei n eine ganze Zahl unter Einschluß der Null bedeutet) liegt, der Steuerschaltkreis (4) eine erste Korrektur in Ansprechen auf ein Ausgangssignal der Spurverschiebung-Erfassungseinrichtung (3) liefert, und wenn die Wiedergabegeschwindigkeit zwischen dem (2n+1)-fachen und dem (2n+2)-fachen der Aufzeichnungsgeschwindigkeit liegt, der Steuerschaltkreis (5) eine zweite Korrektur in Ansprechen auf das Ausgangssignal der Spurverschiebung-Erfassungseinrichtung (3) liefert.

3. Vorrichtung nach Anspruch 2, bei der die Spurverschiebung-Erfassungseinrichtung (3) einen derart ausgebildeten Zähler (12, 13) umfaßt, der die auf der Steuerspur des Magnetbandes während eines Feldes aufgezeichneten Steuerimpulse zählt und das Ausgangssignal erzeugt, wenn der Zählwert entweder eine gerade Zahl unter Einschluß von Null oder eine ungerade Zahl ist und gemäß dem Signal der Geschwindigkeitserfassungseinrichtung (2).

4. Vorrichtung nach Anspruch 3, bei der die Spurverschiebung-Erfassungseinrichtung (3) das Ausgangssignal erzeugt, wenn der Zählwert eine ungerade Zahl ist und die Wiedergabegeschwindigkeit zwischen dem (4n−1)-fachen und (4n+1)-fachen . der Aufzeichnungsgeschwindigkeit liegt, und wenn der Zählwert eine gerade Zahl unter Einschluß von Null ist und die Wiedergabegeschwindigkeit zwischen dem (4n+1)-fachen und dem (4n+3)-fachen der Aufzeichnungsgeschwindigkeit liegt.

FIG. 1.

TAPE TRANSPORT DIRECTION

HEAD SCANNING DIRECTION

VERTICAL SYNCHRONISING SIGNAL

7H

15H

H ADJUSTMENT

$A_1$ $B_1$ $A_2$ $B_2$ $A_3$ $B_3$ $A_4$ $B_4$ $A_5$ $B_5$ $A_6$

| a | FIELD NUMBER | $F_1$ | $F_2$ | $F_3$ | $F_4$ | $F_5$ | $F_6$ | $F_7$ | $F_8$ | $F_9$ | |
|---|---|---|---|---|---|---|---|---|---|---|---|
| b | SCANNING TRACK | $A_1$ | $A_1$ | $A_1$ | $A_1$ | $A_2$ | $A_2$ | $A_2$ | $A_2$ | $A_3$ | |
| c | H NUMBER | 264 | 264 | 264 | 261 | 264 | 264 | 264 | 261 | 264 | |
| d | DELAY TIME | 0 | 0 | 0 | 0 | 2 | 1 | 0 | 0 | 2 | |
| e | CORRECTED H | 264 | 264 | 264 | 263 | 263 | 263 | 264 | 263 | | |

FIG. 2.

0 038 190

| a | FIELD NUMBER | $F_1$ | $F_2$ | $F_3$ | $F_4$ | $F_5$ | $F_6$ | $F_7$ | $F_8$ | $F_9$ | |
|---|---|---|---|---|---|---|---|---|---|---|---|
| b | SCANNING TRACK | $A_1$ | $A_1$ | $A_2$ | $A_3$ | $A_3$ | $A_4$ | $A_5$ | $A_5$ | $A_6$ | |
| c | H NUMBER | 264 | 261 | 261 | 264 | 261 | 261 | 264 | 261 | 261 | |
| d | DELAY TIME | 2 | 1 | 2 | 2 | 1 | 2 | 2 | 1 | 2 | |
| e | CORRECTED H | 263 | 262 | 261 | 263 | 262 | 261 | 263 | 262 | | |
| f | DELAY TIME | 2 | 0 | 1 | 2 | 0 | 1 | 2 | 0 | 1 | |
| g | CORRECTED H | 262 | 262 | 262 | 262 | 262 | 262 | 262 | 262 | | |

FIG. 3.

(a) TAPE SPEED   -5  -4  -3  -2  -1   0   1   2   3   4   5   6   7   8

(b) FIRST CORRECTION

(c) SECOND CORRECTION

FIG. 4.

FIG. 5.

FIG. 6.

3

(a) HSW

(b) P₁

(c) CTL

(d) P₂

(e) S₁

(f) S₂

(g) S₃

*FIG. 7.*

(a) HSW

(b) P₁

(c) CTL

(d) P₂

(e) S₁

(f) S₂

(g) S₃

*FIG. 8.*